# EUROPÄISCHE PATENTSCHRIFT

(11) **EP 2 540 159 B1**
(45) Veröffentlichungstag und Bekanntmachung des Hinweises auf die Patenterteilung: **30.10.2013**
(21) Anmeldenummer: 12167330.5
(22) Anmeldetag: 09.05.2012
(51) Int. Cl.: A01K 27/00

(54) **Hundegeschirr**
Dog harness
Harnais pour chiens

(30) Priorität: 29.06.2011 DE 202011050582 U
(43) Veröffentlichungstag der Anmeldung: 02.01.2013
(73) Patentinhaber: RTNTRD Rolf Trautwein und Nadine Trautwein Research & Development GbR, 33818 Leopoldshöhe (DE)
(72) Erfinder: Trautwein, Rolf, 33813 Oerlinghausen (DE)
(74) Vertreter: Bittner, Thomas L.

(56) Entgegenhaltungen:
- DE-U1-202004 018 741
- DE-U1-202009 007 056
- US-A- 5 134 836
- US-A1- 2004 112 303
- US-A1- 2006 037 562
- US-A1- 2007 044 735

## Beschreibung

Die Erfindung betrifft ein Hundegeschirr.

### Hintergrund der Erfindung

Hundegeschirre mit einer Geschirranordnung, die über mehrere Gurt- oder Riemenelemente sowie wahlweise weitere Geschirrteile verfügt, sind in verschiedenen Ausgestaltungen bekannt. Während Hundegeschirre traditionell unter Verwendung von Ledermaterialien gefertigt wurden, werden heutzutage zunehmend auch Gurt- oder Riemenmaterialien aus Kunststoffen verwendet.

Hundegeschirre sind zum Beispiel als Geschirre bekannt, die bevorzugt bei der Gebrauchshundeausbildung eingesetzt werden. Bei einer bekannten Art eines Hundegeschirrs sind ein Schulterteil sowie ein beidseitig hieran angeordneter Bauchriemen vorgesehen, welcher mit dem Schulterteil ein umgreifendes Geschirrelement bildet, das sich beim Tragen über die Schultern und den Bauch des Hundes erstreckt. An dem Schulterteil ist bei dem bekannten Hundegeschirr weiterhin ein Brustriemen gebildet, welcher von dem Schulterteil nach vom steht.

Ein solches Hundegeschirr ist beispielsweise aus dem Dokument DE 20 2009 007 056 U1 bekannt. Zur Verbesserung des Tragekomforts für das Tier wurde dort vorgeschlagen, einen am Bauriemen gebildeten seitlichen Verschluss überlappend mit dem Schulterteil anzuordnen, wodurch ein Scheuern des Verschlusses auf dem Tierkörper unterbunden ist.

Einfachere Hundegeschirre mit weniger Tragekomfort sind weiterhin aus den Dokumenten DE 20 2009 013 880 U1 sowie DE 20 2010 006 992 U1 bekannt.

Aus dem Dokument US 2006/0037562 A1 ist ein Hundegeschirr mit einer Geschirranordnung bekannt. Die Geschirranordnung weist ein Schulterteil, einen Bauchriemen sowie einen Brustriemen auf. Der Brustriemen ist über vom Schulterteil nach vom abstehende und freiliegende Laschen am Schulterteil aufgenommen. Zwischen Brustriemen und Bauchriemen ist eine zusätzliche Riemenverbindung von der Brust zum Bauch hin vorgesehen. Bauchriemen und Brustriemen können mit Polsterelementen versehen sein.

Aus dem Dokument DE 20 2004 018 741 U1 ist eine Halsung für Hunde bekannt. Die Halsung besteht aus einem Kopfriemen, der einen Halsraum und eine Nasenschlaufe ausbildet, die durch ein erstes, als Kehlschieber ausgebildetes Schiebeelement derart voneinander getrennt sind, dass die Größe der Nasenschlaufe durch eine Verschiebung des Kehlschiebers relativ zum Kopfriemen einstellbar ist. Ein erstes Ende des Kopfriemens ist an einem zweiten, als Genickschieber ausgebildeten Schiebeelement befestigt, wobei der Kopfriemen mit seinem zweiten Ende verschiebbar im Genickschieber geführt ist und wobei der Kehlschieber zwischen dem ersten, am Genickschieber befestigten Ende und dem zweiten, verschiebbar im Genickschieber geführten Ende des Kopfriemens angeordnet und mit einem Ende am Kehlschieber festgelegt ist.

Aus dem Dokument US 5,134,836 ist ein Sattelgurt mit einer Gurtpolsterung bekannt.

Im Dokument US 2007/0044735 A1 ist ein Hundegeschirr offenbart, welches über ein Schulterteil verfügt. An seitliche Ausläufer des Schulterteils koppelt ein Brustriemen, welcher über ein zusätzliches Riemenelement mit einem Bauchriemen verbunden ist, der ebenfalls vom Schulterteil ausgeht.

Das Dokument US 2004/0112303 A1 offenbart eine Hundehalsung.

### Zusammenfassung der Erfindung

Aufgabe der Erfindung ist es, ein Hundegeschirr mit verbesserten Gebrauchs- und Trageeigenschaften anzugeben.

Diese Aufgabe wird erfindungsgemäß durch ein Hundegeschirr nach dem unabhängigen Anspruch 1 gelöst. Vorteilhafte Ausgestaltungen der Erfindung sind Gegenstand von abhängigen Unteransprüchen.

Die Erfindung umfasst den Gedanken eines Hundegeschirrs, bei dem eine Geschirranordnung gebildet ist mit einem Schulterteil, einem Bauchriemen, welcher beidseitig mit dem Schulterteil verbunden ist und mit dem Schulterteil ein umgreifendes Geschirrelement bildet, und einem Brustriemen, welcher vom Schulterteil nach vorn stehend angeordnet und beidseitig hiermit verbunden ist, wobei auf dem Bauchriemen ein Bauchriemenpolsterelement angeordnet ist, welches auf dem Bauchriemen in Längsrichtung des Bauchriemens verschiebbar gelagert und wenigstens innenseitig mit einem Polstermaterial versehen ist.

Bei dem vorgeschlagenen Hundegeschirr sind die Trage- und Nutzungseigenschaften insbesondere dadurch verbessert, dass mit Hilfe des Polsterelementes auf dem Bauriemen ein Scheuern des Bauriemens auf dem Tierkörper vermieden ist. Der Bauriemen ist gegenüber dem Tierkörper abgepolstert. Darüber hinaus lässt die verschiebbare Lagerung des Polsterelementes auf dem Bauchriemen in Längsrichtung eine Relativverlagerung oder -bewegung zwischen Bauchriemen und Polsterelement zu, wodurch ein noch weitergehender Schutz gegen Scheuern am Tierkörper gebildet ist. Diese Verschiebbarkeit ist leichtgängig, so dass der Bauchriemen beim Nutzen des Geschirres am Tier ohne weiteres relativ zum Bauchriemenpolsterelement verrutschen kann. Das innenseitig angeordnete Polstermaterial erstreckt sich vorzugsweise über eine Breite, die Größer als die Riemenbreite des Bauchriemens ist.

Ein Abschnitt des Bauchriemens, welcher sich vom Bereich des Bauchriemens mit dem Bauchriemenpolsterelement her erstreckt, und ein zugeordneter Abschnitt des Brustriemens, welcher mit dem Schulterteil überlappt, laufen auf dem Schulterteil beidseitig jeweils in einem Winkel von weniger als 90° zusammen. Die beiden Abschnitte sind also gerade nicht im rechten Winkel zusammengeführt. Dies führt dazu, dass der Verlauf des Brustriemens im Vergleich zu einer horizontalen Lage etwas nach unten geneigt ist, wenn der Bauchriemen, von der Seite betrachtet, etwa in einer vertikalen Ebene verläuft.

Der Brustriemen ist an dem Schulterteil beidseitig jeweils in einem Führungselement verschiebbar geführt. Das Führungselement ist als Führungslasche ausgeführt. Das Führungselement ist aus einem elastischen Material, zum Beispiel einem Gummiband, was aufgenäht ist. Zur Optimierung der Führungsfunktion kann vorgesehen sein, das Führungselement am Rand des Schulterteils oder benachbart hierzu anzuordnen.

Es kann vorgesehen sein, dass weitere Abschnitte und / oder Elemente des Hundegeschirrs zumindest innenseitig, also dem Tierkörper zugewandt, mit Polsterungen ausgestattet sind, sei es mit fest aufgebrachten Polsterungen und / oder lösbar befestigten Polsterelementen, die zum Beispiel mittels eines Klettbandes angebracht sind. Hier ist beispielsweise der Brustriemen zu nennen, der abschnittsweise oder vollständig mit einer Innenpolsterung versehen sein kann. Gleiches gilt für das Schulterteil.

In einer Ausgestaltung sind an der Geschirranordnung Licht reflektierende Applikationen gebildet, die die Wahrnehmbarkeit des das Geschirr tragenden Hundes bei Dunkelheit oder schlechter Sicht verbessern. Derartige Applikationen können beispielsweise entlang von Randbereichen des Brustriemens gebildet sein, sei es durchgehend oder nur abschnittsweise. Aber auch das feste oder lösbare Anordnen von flächigen Licht reflektierenden oder streuenden Applikationen auf den Riemenelementen und / oder dem Schulterteil kann vorgesehen sein.

Eine bevorzugte Weiterbildung der Erfindung sieht vor, dass das Bauchriemenpolsterelement lösbar auf dem Bauchriemen angeordnet ist. Eine lösbare Befestigung des Bauchriemenpolsterelementes ermöglicht beispielsweise die Nutzung unterschiedlicher Polsterelemente, wodurch beispielsweise eine individuelle Anpassbarkeit des Geschirres an einen Hund ermöglicht ist. Auch ein Austausch bei Verschleiß ist hierdurch erleichtert.

Bei einer zweckmäßigen Ausgestaltung der Erfindung kann vorgesehen sein, dass das Bauchriemenpolsterelement den Bauchriemen umgreifend an diesem angeordnet ist. Die den Bauchriemen umgreifende Befestigung des Bauchriemenpolsterelementes unterstützt eine sichere Lagerung und Halterung des Polsterelementes am Bauchriemen. Das Umgreifen des Bauchriemens kann im Wesentlichen über die gesamte Länge, über welche sich das Bauchriemenpolsterelement entlang des Bauchriemens erstreck, oder abschnittsweise gebildet sein.

Eine vorteilhafte Ausführungsform der Erfindung sieht vor, dass der Bauchriemen an dem Bauchriemenpolsterelement in einer sich in Längsrichtung des Bauchriemenpolsterelementes erstreckenden und geschlossen ausgebildeten Aufnahmetasche verläuft. Außenseitig kann an dem Bauchriemenpolsterelement eine sich selbst verschließende Öffnung vorgesehen sein, beispielsweise mittels einer Materialunterbrechung des für das Polsterelement genutzten Materials. Die Öffnung ermöglicht einen Zugang in die Aufnahmetasche. Der Selbstverschluss kann dadurch gebildet sein, dass sich Abschnitte des unterbrochenen Materials überlappen, sodass die Öffnung sich quasi selbst verschließt, nachdem der Nutzer die überlappenden Abschnitte des Materials zuvor beiseite geschoben hat, um Zugriff auf das Innere der Aufnahmetasche zu erlangen. Vorzugsweise gelangt der Bauchriemen bei dieser oder anderen Ausführungen durch eine Eingangsöffnung, die zum Beispiel als Schlitzöffnung ausgeführt ist, an einem Ende des Bauchriemenpolsterelementes in die Aufnahmetasche und verlässt diese durch eine Ausgangsöffnung, die wahlweise auch als Schlitzöffnung ausgeführt sein kann, am anderen Ende des Bauchriemenpolsterelementes.

Bevorzugt sieht eine Fortbildung der Erfindung vor, dass der Bauchriemen ein Längenverstellelement aufweist, das in einer Nutzungsstellung des Bauchriemenpolsterelementes zumindest innenseitig von dem Bauchriemenpolsterelement abgedeckt ist. Das Längeverstellelement, was beispielsweise mit einer Schiebeschnalle ausgebildet ist, ist vorzugsweise in dem Bauchriemenpolsterelement aufgenommen, beispielsweise in der Aufnahmetasche, wenn das Bauchriemenpolsterelement den Bauchriemen umgreifend ausgebildet ist.

Bei einer vorteilhaften Ausgestaltung der Erfindung kann vorgesehen sein, dass der Bauch-riemen einen Verschluss aufweist, die in einer Nutzungsstellung des Bauchriemenpolsterelementes zumindest innenseitig von dem Bauchriemenpolsterelement abgedeckt ist. Der Verschluss ist vorzugsweise von dem Bauchriemenpolsterelement aufgenommen, beispielsweise in der Aufnahmetasche, wenn das Bauchriemenpolsterelement den Bauchriemen umgreifend ausgeführt ist.

Eine Weiterbildung der Erfindung kann vorsehen, dass das Bauchriemenpolsterelement einen Abschnitt des Bauchriemens, in welchem dieser frei von einer Überlappung mit dem Schulterteil ist, zu wenigstens 3/4 der Abschnittslänge polsternd abdeckt. Hierbei ist bevorzugt vorgesehen, dass das Bauchriemenpolsterelement den Abschnitt des Bauchriemens, in dessen von Überlappung mit dem Schulterteil frei bleibendem Bereich, nicht vollständig abdeckt, sodass das Bauchriemenpolsterelement in diesem Bereich längs des Bauchriemens noch leicht verschoben werden kann.

Eine bevorzugte Weiterbildung der Erfindung sieht vor, dass dem Bauchriemen in einem Abschnitt, in welchem der Bauchriemen mit dem Schulterteil überlappt, ein Klammer- oder Befestigungselement auf der Außenseite des Schulterteils zugeordnet ist, in welches der Bauchriemen zur Sicherung an dem Schulterteil einführbar ist. Das Klammer- oder Befestigungselement ist beispielsweise als eine Steckaufnahme ausgeführt. Als Materialien für das Klammer- oder Befestigungselement kann vorzugsweise Kunststoff oder Metall zum Einsatz kommen. Im Fall der Verwendung von Kunststoff ist eine Ausführung als Spritzgussteil bevorzugt.

Bevorzugt sieht eine Fortbildung der Erfindung vor, dass an dem Bauchriemen ein seitlich angeordneter Verschluss gebildet ist, welcher außenseitig und überlappend mit dem Schulterteil gebildet ist. Der Verschluss kann in einer Ausgestaltung auf einem gepolsterten Abschnitt der Geschirranordnung angeordnet sein, vorzugsweise auf dem Schulterteil. Hier ist eine Anordnung des Verschlusses auf Höhe des Brustriemens bevorzugt.

Bei einer vorteilhaften Ausgestaltung der Erfindung kann vorgesehen sein, dass an dem Schulterteil ein Griffelement angeordnet ist. In einer Ausgestaltung ist das Griffelement an dem Schulterteil angenäht.

Eine Weiterbildung der Erfindung kann vorsehen, dass Griffelement zwischen einer Griffnutzungsstellung, in welcher ein Nutzer in das Griffelement eingreifen kann, und einer Griffablagerungsstellung verlagerbar ist, in welcher das Griffelement wenigstens abschnittsweise auf dem Schulterteil aufliegt. In der Griffablagerungsstellung wird die Wahrscheinlichkeit für ein unbeabsichtigtes Einhake in das Griffelement vermindert. Eine vorteilhafte Ausführungsform der Erfindung kann vorsehen, dass das Griffelement mit Hilfe von Befestigungselementen an dem Schulterteil befestigt ist, die beim Verlagern zwischen der Griffnutzungsstellung und der Griffablagerungsstellung umschwenken. Das Umschwenken der Befestigungselemente kann in einer Ausgestaltung gleichgerichtet geschehen, also in gleicher Schwenkrichtung. In einer alternativen Ausgestaltung führen die Befestigungselemente eine Schwenkbewegung in entgegengesetzten Richtungen aus. Das Umschwenken kann auch als ein Umklappen betrachtet werden, weshalb eine Art klappbares Griffelement gebildet ist. Die Befestigungselemente können in einer Ausgestaltung mit Hilfe von Einfach- oder Mehrfach-Ringelementen gebildet sein. Bevorzugt sind an dem Griffelement und an dem Schulterteil zugeordnete Fixierelemente vorgesehen, die das Griffelement in der Griffablagerungsstellung an dem Schulterteil lösbar fixieren. Als Fixiermittel sind zum Beispiel Klettverschlusselemente vorgesehen, die ein Anhaften des Griffelementes in der Griffablagerungsstellung gewährleisten.

Eine bevorzugte Weiterbildung der Erfindung sieht vor, dass ein unter dem Griffelement angeordneter Abschnitt des Schulterteils mit einer außenseitigen Fingerpolsterung versehen ist. Benachbart zum Griffelement können Rückseitig D-Elemente vorgesehen sein, zum Beispiel aus Metall oder Kunststoff. Diese D-Elemente können genutzt werden, um an der Geschirranordnung zum Beispiel Blinkelemente lösbar zu befestigen.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: eine perspektivische Darstellung eines Hundegeschirrs,
- Fig. 2: eine Darstellung des Hundegeschirrs von oben und
- Fig. 3: eine Darstellung eines Bauchriemenabschnittes mit einem Bauchriemenpolsterele-mentes.

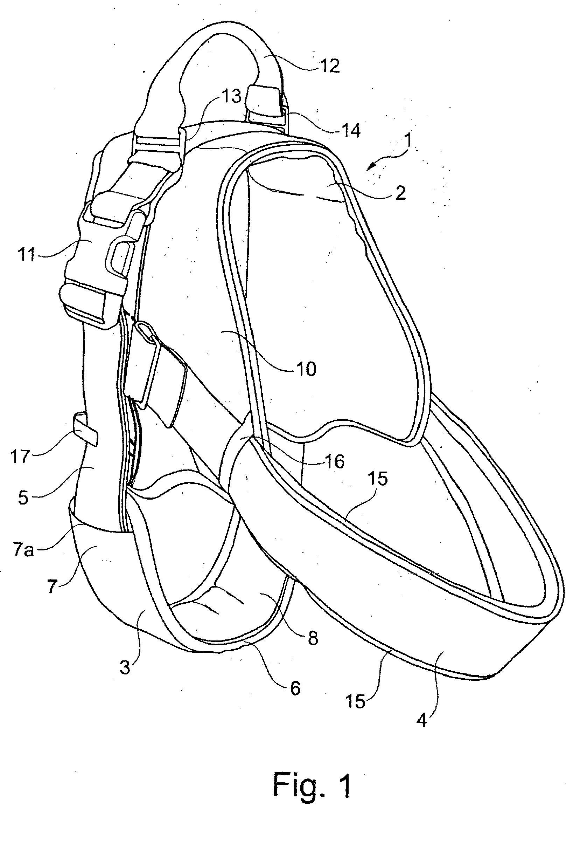

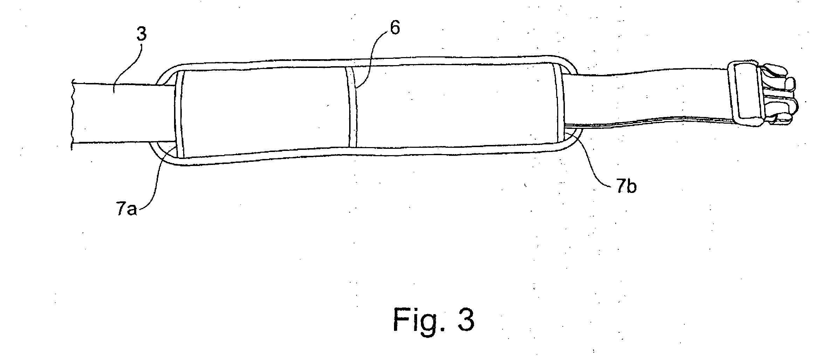

Fig. 1 zeigt eine perspektivische Darstellung eines Hundegeschirrs, bei dem eine Geschirranordnung 1 mit einem Schulterteil 2, einem Bauchriemen 3 sowie einem Brustriemen 4 gebildet ist. Der Bauchriemen 3 ist in seiner Länge verstellbar, wobei der Bauchriemen 3 in einem Bauchriemenabschnitt 5 als Doppelriemen oder -gurt ausgeführt ist. In dem Bauchriemenabschnitt 5 ist auf dem Bauchriemen 3 ein Bauchriemen- oder Bauchriemenpolsterelement 6 angeordnet, welches längs des Bauchriemens 3 verschiebbar ist. Der Bauchriemen 3 verläuft an dem Bauchriemenpolsterelement 6 in einer Aufnahmetasche 7, die der Bauchriemen 3 durch eine Eingangsöffnung 7a eintritt und die der Bauchriemen 3 durch eine Ausgangsöffnung 7b verlässt (vgl. im Detail Fig. 3), die beide als Schlitzöffnung ausgeführt sind. Innen-seitig verfügt Bauchriemenpolsterelement 6 über eine Polsterung 8 aus einem Polstermaterial, beispielsweise einem Neoprenmaterial. Zusammen mit dem Schulterteil 2 bildet der Bauchriemen 3 ein umgreifendes Geschirrelement, welches in Fig. 1 in einer geschlossenen Ausführung gezeigt ist.

Vom Schulterteil 2 nach vorn stehend ist der Brustriemen 4 an dem Schulterteil 2 befestigt, was bei der dargestellten Ausfiihrungsform mittels Vernähen geschieht. Hierbei verläuft der Brustriemen 4 in einem Winkel abweichend von 90° zum Schulterteil 2 und auch zum Bauchriemen 3. Das Schulterteil 2 und der Brustriemen 4 sind bei der in Fig. 1 dargestellten Ausführungsform mit einer innenseitigen Polsterung versehen. Die Polsterung kann je nach Ausgestaltung abschnittsweise oder vollständig gebildet sein

Gemäß Fig. 1 ist auf der Außenseite 10 des Schulterteils 2 ein Verschlussl 1 im Bauchriemen 3 angeordnet. Der Verschluss 11 ist als ein Steckverschluss ausgeführt, mit dem der Bauchriemen 3 geöffnet und geschlossen werden kann. Der Verschluss 11 überlappt vollständig mit dem Schulterteil 2, so dass beim Tragen des Hundegeschirrs kein Körperkontakt zwischen dem Verschluss 11 und dem Körper des Hundes entsteht.

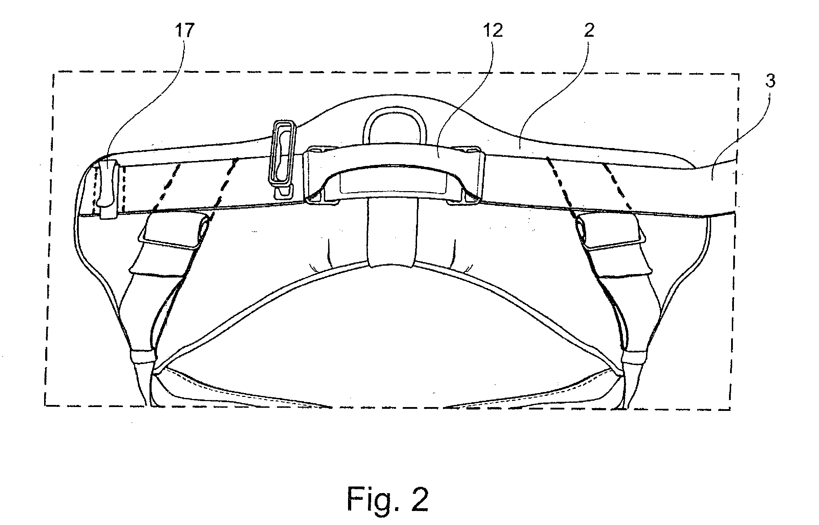

Gemäß Fig. 1 ist auf dem Schulterteil 2 ein Griffelement 12 gebildet. Das Griffelement 12 ist über gelenkartig ausgeführte Befestigungselemente 13, 14 an dem Schulterteil 2 auf der Oberseite im Wesentlichen mittig befestigt (vgl. auch Fig. 2). Mittels Schwenken der gelenkartigen Befestigungselemente 13, 14, die bei der dargestellten Ausführungsform als Doppel-Ringelemente ausgeführt sind, kann das Griffelement 12 zwischen der in Fig. 1 dargestellten Griffnutzungsstellung und einer Griffablagerungsstellung (nicht dargestellt) verlagert werden, in welcher das Griffelement 12 ganz oder teilweise auf der Oberfläche des Schulterteils 2 aufliegt.

Gemäß Fig. 1 sind an dem Hundegeschirr im Randbereich des Brustriemens 4 Licht reflektierende oder streuende Applikationen 15 gebildet.

Der längenverstellbare Brustriemen 4 ist am vorderen Rande des Schulterteils 2 mittels einer Führungslasche 16 geführt, derart, dass der Brustriemen 4 hierin verschoben werden kann. Die Führungslasche 16 ist aus einem elastischen Material, zum Beispiel einem Gummiband.

Gemäß Fig. 1 ist weiterhin eine Stecklasche 17 gebildet, in welcher der Bauchriemen 3 seitlich am Schulterteil 2 lösbar aufgenommen ist. Die Stecklasche 17 ist derart gebildet, dass der darin leicht klemmend aufgenommene Bauchriemenabschnitt nach vorne zum Brustriemen 4 hin herausgenommen werden kann. Die Stecklasche 17 besteht bei der gezeigten Ausführungsform aus Kunststoff. Aber auch Metall kann hierfür zum Einsatz kommen.

Fig. 2 zeigt eine Darstellung des Hundegeschirrs aus Fig. 1 von oben. In Fig. 3 ist eine Darstellung des Bauchriemenabschnittes 5 mit dem Bauchriemenpolsterelementes 6 gezeigt.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Hundegeschirr, bei dem eine Geschirranordnung (1) mit
- einem Schulterteil (2),
- einem Bauchriemen (3), welcher beidseitig mit dem Schulterteil (2) verbunden ist und mit dem Schulterteil (2) ein umgreifendes Geschirrelement bildet, und
- einem Brustriemen (4) gebildet ist, welcher vom Schulterteil (2) nach vorn stehend angeordnet und beidseitig hiermit verbunden ist,
wobei auf dem Bauchriemen (3) ein Bauchriemenpolsterelement (6) angeordnet ist, welches auf dem Bauchriemen (3) in Längsrichtung des Bauchriemens (3) verschiebbar gelagert und wenigstens innenseitig mit einem Polstermaterial versehen ist und
wobei der Brustriemen (3) am vorderen Rande des Schulterteils (2) beidseitig jeweils in einem als Führungslasche ausgeführten Führungselement (16) verschiebbar geführt ist,
**dadurch gekennzeichnet, dass**
- ein Abschnitt des Bauchriemens (3), welcher sich vom Bereich des Bauchriemens (3) mit dem Bauchriemenpolsterelement her erstreckt, und ein zugeordneter Abschnitt des Brustriemens (4), welcher mit dein Schulterteil (2) überlappt, auf dem Schulterteil (2) beidseitig jeweils in einem Winkel von weniger als 90° zusammenlaufen und
- das als Führungslasche ausgeführte Führungselement (16) aus elastischem Material ist.

2. Hundegeschirr nach Anspruch 1, **dadurch gekennzeichnet, dass** das Bauchriemenpolsterelement (6) lösbar auf dem Bauchriemen (3) angeordnet ist.

3. Hundegeschirr nach Anspruch 1 oder 2, **dadurch gekennzeichnet, dass** das Bauchriemenpolsterelement (6) den Bauchriemen (3) umgreifend an diesem angeordnet ist.

4. Hundegeschirr nach Anspruch 3, **dadurch gekennzeichnet, dass** der Bauchriemen (3) an dem Bauchriemenpolsterelement (6) in einer sich in Längsrichtung des Bauchriemenpolsterelementes (6) erstreckenden und geschlossen ausgebildeten Aufnahmetasche (7) verläuft.

5. Hundegeschirr nach mindestens einem der vorangehenden Ansprüche, **dadurch gekennzeichnet, dass** der Bauchriemen (3) ein Längenverstellelement aufweist, das in einer Nutzungsstellung des Bauchriemenpolsterelementes (6) zumindest innenseitig von dem Bauchriemenpolsterelement (6) abgedeckt ist.

6. Hundegeschirr nach mindestens einem der vorangehenden Ansprüche, **dadurch gekennzeichnet, dass** der Bauchriemen (3) einen Verschluss aufweist, die in einer Nutzungsstellung des Bauchriemenpolsterelementes (6) zumindest innenseitig von dem Bauchriemenpolsterelement (6) abgedeckt ist.

7. Hundegeschirr nach mindestens einem der vorangehenden Ansprüche, **dadurch gekennzeichnet, dass** das Bauchriemenpolsterelement (6) einen Abschnitt (5) des Bauchriemens (3), in welchem dieser frei von einer Überlappung mit dem Schulterteil (2) ist, zu wenigstens 3/4 der Abschnittslänge polsternd abdeckt.

8. Hundegeschirr nach mindestens einem der vorangehenden Ansprüche, dadurch g e - kennzeichnet, dass dem Bauchriemen (3) in einem Abschnitt, in welchem der Bauchriemen (3) mit dem Schulterteil (2) überlappt, ein Klammer- oder Befestigungselement (17) auf der Außenseite des Schulterteils (2) zugeordnet ist, in welches der Bauchriemen (3) zur Sicherung an dem Schulterteil (2) einführbar ist.

9. Hundegeschirr nach mindestens einem der vorangehenden Ansprüche, dadurch g e - kennzeichnet, dass an dem Bauchriemen (3) ein seitlich angeordneter Verschluss (11) gebildet ist, welcher außenseitig und überlappend mit dem Schulterteil (2) gebildet ist.

10. Hundegeschirr nach mindestens einem der vorangehenden Ansprüche, dadurch g e-kennzeichnet, dass an dem Schulterteil (2) ein Griffelement (12) angeordnet ist.

11. Hundegeschirr nach Anspruch 10, **dadurch gekennzeichnet, dass** Griffelement (12) zwischen einer Griffnutzungsstellung, in welcher ein Nutzer in das Griffelement (12) eingreifen kann, und einer Griffablagerungsstellung verlagerbar ist, in welcher das Griffelement (12) wenigstens abschnittsweise auf dem Schulterteil (2) aufliegt.

12. Hundegeschirr nach mindestens einem der Ansprüche 10 oder 11, **dadurch gekennzeichnet, dass** ein unter dem Griffelement (12) angeordneter Abschnitt des Schulterteils (2) mit einer außenseitigen Fingerpolsterung versehen ist.

## Claims

1. A dog harness, in which a harness arrangement (1) is formed with
- a shoulder part (2),
- an abdomen strap (3), which is connected on both sides with the shoulder part (2) and forms with the shoulder part (2) an encompassing harness element, and
- a chest strap (4), which is arranged projecting forward from the shoulder part (2) and is connected on both sides herewith,
wherein on the abdomen strap (3) an abdomen strap padding element (6) is arranged, which is mounted on the abdomen strap (3) displaceably in longitudinal direction and is provided at least on the inner side with a padding material and
wherein the chest strap (3) at the front edge of the shoulder part (2) is guided displaceably on both sides respectively in a guide element (16) which is embodied as a guide tab,
**characterized in that**
- a section of the abdomen strap (3), which extends from the region of the abdomen strap (3) with the abdomen strap padding element, and an associated section of the chest strap (4), which overlaps with the shoulder part (2), converge on the shoulder part (2) on both sides respectively at an angle of less than 90° and
- the guide element (16), embodied as a guide tab, is of elastic material.

2. The dog harness according to Claim 1, **characterized in that** the abdomen strap padding element (6) is arranged detachably on the abdomen strap (3).

3. The dog harness according to Claim 1 or 2, **characterized in that** the abdomen strap padding element (6) is arranged embracing the abdomen strap (3) on the latter.

4. The dog harness according to Claim 3, **characterized in that** the abdomen strap (3) runs on the abdomen strap padding element (6) in a receiving pocket (7) extending in longitudinal direction of the abdomen strap padding element (6) and constructed so as to be closed.

5. The dog harness according to at least one of the preceding claims, **characterized in that** the abdomen strap (3) has a lengthwise adjusting element, which in a position of use of the abdomen strap padding element (6) is covered at least on the inner side by the abdomen strap padding element (6).

6. The dog harness according to at least one of the preceding claims, **characterized in that** the abdomen strap (3) has a closure which in a position of use of the abdomen strap padding element (6) is covered at least on the inner side by the abdomen strap padding element (6).

7. The dog harness according to at least one of the preceding claims, **characterized in that** the abdomen strap padding element (6) covers over at least % of the section length in a padding manner a section (5) of the abdomen strap (3) in which the latter is free of an overlapping with the shoulder part (2).

8. The dog harness according to at least one of the preceding claims, **characterized in that** a clip- or fastening element (17) on the outer side of the shoulder part (2) is associated with the abdomen strap (3) in a section in which the abdomen strap (3) overlaps with the shoulder part (2), into which clip- or fastening element the abdomen strap (3) is able to be introduced for securing on the shoulder part (2).

9. The dog harness according to at least one of the preceding claims, **characterized in that** on the abdomen strap (3) a laterally arranged closure (11) is formed, which is formed externally and overlapping with the shoulder part (2).

10. The dog harness according to at least one of the preceding claims, **characterized in that** a grip element (12) is arranged on the shoulder part (2).

11. The dog harness according to Claim 10, **characterized in that** grip element (12) is displaceable between a grip usage position, in which a user can engage into the grip element (12), and a grip deposited position, in which the grip element (12) rests at least partially on the shoulder part (2).

12. The dog harness according to at least one of Claims 10 or 11, **characterized in that** a section of the shoulder part (2) arranged under the grip element (12) is provided with an external finger padding.

## Revendications

1. Harnais pour chiens, dans lequel un harnachement (1) est formé par
- une partie d'épaule (2),
- une sangle de ventre (3), laquelle est reliée des deux côtés à la partie d'épaule (2) et forme avec la partie d'épaule (2) un élément de harnais enveloppant, et
- une sangle de poitrine (4), laquelle est disposée de manière à dépasser vers l'avant à partir de la partie d'épaule (2) et est reliée des deux côtés à cette dernière,
un élément de rembourrage de sangle de ventre (6) étant disposé sur la sangle de ventre (3), lequel est monté de manière à pouvoir coulisser sur la sangle de ventre (3) en direction longitudinale de la sangle de ventre (3) et lequel est muni d'un matériau de rembourrage au moins du côté intérieur et
la sangle de poitrine (3) étant guidée de manière à pouvoir coulisser sur le bord antérieur de la partie d'épaule (2), des deux côtés, respectivement dans un élément de guidage (16) réalisé en tant que lanière de guidage,
**caractérisé en ce que**
- un tronçon de la sangle de ventre (3), lequel s'étend à partir de la zone de la sangle de ventre (3) avec l'élément de rembourrage de sangle de ventre, et un tronçon associé de la sangle de poitrine (4), lequel est en chevauchement avec la partie d'épaule (2), convergent sur la partie d'épaule (2) des deux côtés respectivement selon un angle de moins de 90° et
- **en ce que** l'élément de guidage (16) réalisé en tant que la lanière de guidage est en un matériau élastique.

2. Harnais pour chiens selon la revendication 1, **caractérisé en ce que** l'élément de rembourrage de sangle de ventre (6) est disposé de manière détachable sur la sangle de ventre (3).

3. Harnais pour chiens selon les revendications 1 ou 2, **caractérisé en ce que** l'élément de rembourrage de sangle de ventre (6) est disposé sur la sangle de ventre (3) de manière à envelopper cette dernière.

4. Harnais pour chiens selon la revendication 3, **caractérisé en ce que** la sangle de ventre (3) s'étend, au niveau de l'élément de rembourrage de sangle de ventre (6), dans une poche de logement (7) réalisée de manière fermée s'étendant en direction longitudinale de l'élément de rembourrage de sangle de ventre (6).

5. Harnais pour chiens selon l'une au moins des revendications précédentes, **caractérisé en ce que** la sangle de ventre (3) présente un élément de réglage de la longueur lequel, dans une position d'utilisation de l'élément de rembourrage de sangle de ventre (6), est recouvert par l'élément de rembourrage de sangle de ventre (6) au moins du côté intérieur.

6. Harnais pour chiens selon l'une au moins des revendications précédentes, **caractérisé en ce que** la sangle de ventre (3) présente une fermeture laquelle, dans une position d'utilisation de l'élément de rembourrage de sangle de ventre (6), est recouverte par l'élément de rembourrage de sangle de ventre (6) au moins du côté intérieur.

7. Harnais pour chiens selon l'une au moins des revendications précédentes, **caractérisé en ce que** l'élément de rembourrage de sangle de ventre (6) recouvre de manière à rembourrer un tronçon (5) de la sangle de ventre (3) dans lequel celle-ci est sans chevauchement avec la partie d'épaule (2) de l'ordre d'au moins % de la longueur du tronçon.

8. Harnais pour chiens selon l'une au moins des revendications précédentes, **caractérisé en ce que** l'on associe à la sangle de ventre (3), dans un tronçon dans lequel la sangle de ventre (3) est en chevauchement avec la partie d'épaule (2), un élément d'agrafe ou de fixation (17) sur le côté extérieur de la partie d'épaule (2), dans lequel on peut insérer la sangle de ventre (3) pour le maintien sur la partie d'épaule (2).

9. Harnais pour chiens selon l'une au moins des revendications précédentes, **caractérisé en ce qu'**une fermeture (11) disposée latéralement est formée sur la sangle de ventre (3), laquelle est formée du côté extérieur et de manière à chevaucher avec la partie d'épaule (2).

10. Harnais pour chiens selon l'une au moins des revendications précédentes, **caractérisé en ce qu'**un élément de poignée (12) est disposé sur la partie d'épaule (2).

11. Harnais pour chiens selon la revendication 10, **caractérisé en ce que** l'élément de poignée (12) peut se déplacer entre une position d'utilisation de la poignée dans laquelle un utilisateur peut saisir l'élément de poignée (12), et une position de dépôt de la poignée dans laquelle l'élément de poignée (12) repose au moins par tronçons sur la partie d'épaule (2).

12. Harnais pour chiens selon l'une au moins des revendications 10 ou 11, **caractérisé en ce qu'**un tronçon de la partie d'épaule (2) disposé sous l'élément de poignée (12) est muni d'un rembourrage de doigts du côté extérieur.
